# EUROPEAN PATENT APPLICATION

(11) **EP 1 116 441 A2**
(43) Date of publication of application: **18.07.2001**
(21) Application number: 01610003.4
(22) Date of filing: 11.01.2001
(51) Int. Cl.: A22C 17/00, A22B 5/00

(54) **Method and apparatus for mechanical separation of meat and bones in a part carcass**

(30) Priority: 12.01.2000 DK 200000040
(71) Applicant: Slagteriernes Forskningsinstitut, 4000 Roskilde (DK)
(72) Inventor: Christensen, Flemming H., 3400 Hillerod (DK); Folkmann, Peter, 4140 Borup (DK); Moller, Helge, 2920 Charlottenlund (DK)
(74) Representative: Joergensen, Bjoern Barker

(57) **Abstract**

The tools comprise a first tool for mechanical separation of meat from bones along the spinal cord of a part carcass. The tool has a first, substantially plane knife part (5) with a first side edge (6) provided with a cutting edge, and a second side edge (7) meeting the first side edge (6), and a second knife part (8) extending along the second side edge (7) of the first knife part (5) and forming an angle therewith, said other knife part having a concave, curved course at one side and ending in a third side edge (9) and being at a curved end edge (10) between the second and the third side edge (7, 9) provided with a cutting edge.

## Description

The present invention relates to two tools for mechanical separation of meat from bones along the spinal column of a part carcass, in particular from the middle piece of a pig carcass.

Furthermore, the invention relates to a method and an apparatus for mechanical separation of meat from bones along the spinal column of a part carcass.

From WO 99/08538 (Slagteriernes Forskningsinstitut) cutting tools are known for separating meat from the spinal column of a fore-end of a carcass by spring mounting the cutting tools relative to the spinal column and by moving them relative thereto and along the spinal column. The tools comprise an angular knife for performing a first cut and a knife, substantially curved in two bends, which performs the further separation of meat from the spinal column as well as the cutting off of ribs from the spinal column.

From DK PA 1996 00326 (Slagteriernes Forskningsinstitut) it is known to use scissors to cut the rib-top, i.e. the spinal column without feather bones and ribs, from a middle piece of a split pig carcass.

The object of the present invention is to provide one or more tools which are in particular suitable for separating meat from the bones along the spinal column of a middle piece of a pig carcass, in which the meat is preferably partially cut free or loosened from the spinous processes.

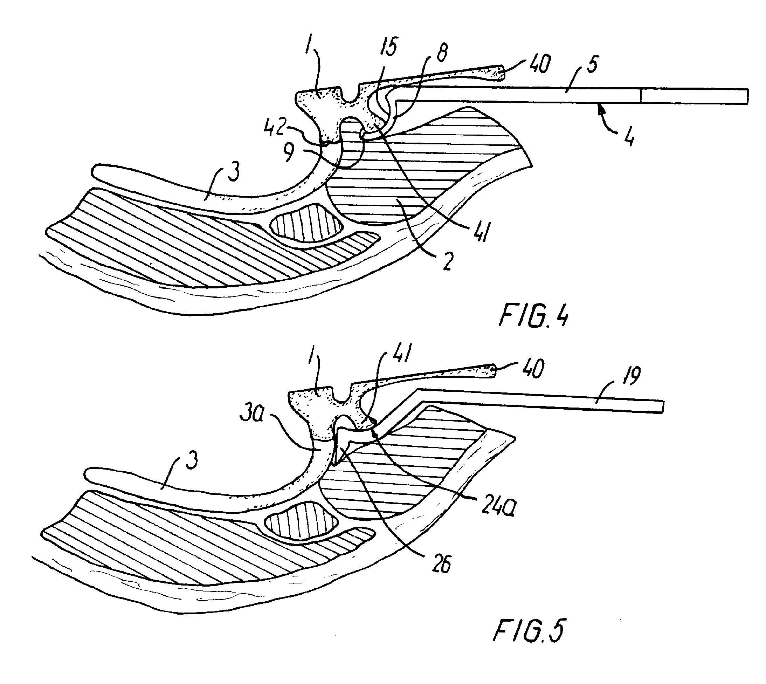

The spinal column consists of vertebras, and in the middle piece the vertebras consist apart from spinous processes and ribs/transverse processes also of rib-top tips (see Figs 4 and 5) which during the usual operations for cutting off the rib-top are left in the meat and have to be removed manually.

The object of the invention is met by means of a tool of the kind mentioned by way of introduction, said tool being characterized in that it comprises a first, substantially plane knife part with a first side edge provided with a cutting edge, and a second side edge meeting the first side edge, and a second knife part extending along the second side edge of the first knife part and forming an angle therewith, said other knife part having a concave, curved course at one side and ending in a third side edge and being at a curved end edge between the second and the third side edges provided with a cutting edge. In this way, a tool is obtained which can be guided along the rib-top tips and which may cut free the meat from the part of the spinal column, in which they are positioned, whereby subsequent operations for separating the bones from the meat are substantially facilitated irrespective of whether they are mechanical or manual ones.

The cutting edge on the end edge is preferably substantially positioned in the plane of the curved, concave side, whereby is obtained that the cutting edge cuts close to the bone, and, moreover, the cutting edge lies preferably in a plane which is perpendicular to the second side edge. The second knife part is thereby preferably obliquely cut from its cutting edge.

The curved side of the second knife part may preferably have the shape of a part cylinder, the generators of which are in parallel with the second side edge and/or the third side edge.

The cutting edge of the first knife part performs the remaining separation of the meat from the spinous processes. The first and the second side edges form preferably together an acute angle, and the first side edge is preferably curved near the second knife part. Thereby the cutting edge of the first side edge obtains a more pronounced cutting movement through the meat during use.

The concave, curved side of the second knife part has preferably a radius of curvature of 7-9 mm, preferably approximately 8 mm.

The thickness of the second knife part is preferably 3-6 mm. Hereby is obtained that the meat during use is pulled out from the interspaces between the rib-top tips on adjacent vertebras.

The object is further met by means of a second tool which is characterized in that it comprises a first part extending in a first plane, a second part, which from the first part and relative thereto, between two side edges of said second part, extends forwards, obliquely to a side of the first plane, through a curve and somewhat backwards towards said plane to a first end edge, and a third part extending from the end edge of the second part under an angle relative to the first plane and away therefrom to a second end edge, a side edge of the third part being provided with a cutting edge. This second tool is suitable for continuing the separation of meat from bones which the first tool performs during use.

A part of a side edge of the second part adjacent a side edge of the third part is preferably provided with a cutting edge for cutting the meat from the bones and thus controlling the separation of meat from bones.

The side edge of the third part provided with a cutting edge preferably extends obliquely forwards relative to the first end edge of the second tool to obtain an improved cutting obliquely to the fibres of the meat.

The object is further met by means of a method, which is characterized in that a part of the spinal column and a first tool according to the invention are spring mounted and moved relative to each other in the longitudinal direction of the spinal column in such a manner that the rib-top tips of the spinal column slide along the concave, curved side of the second knife part and that possibly a second tool according to the invention is spring mounted and moved along the spinal column relative thereto after the first tool in such a manner that the rib-top tips slide along the concave side of the curved part of the second part of the second tool and that the third part slide along the ribs of the part carcass.

Finally, the object is met by means of an apparatus for mechanical separation of meat and bones along the spinal column of a part carcass, said apparatus comprising a conveyor designed to clamp and retain the part carcass at the spinal column and thus convey the part carcass in the longitudinal direction of the spinal column, in which a first tool according to the invention is spring mounted by the side of the conveyor. Preferably, a second tool according to the invention is spring mounted by the side of the conveyor after the first tool relative to the travelling direction of the conveyor.

The conveyor may be of a known construction, see for instance W0 99/08538 or EP-A-1 059 037.

The invention will be explained in detail in the following by means of examples of embodiments with reference to the schematic drawings, in which
Fig. 1 shows a middle piece of a backsplit pig carcass,
Figs 2a-2c a first tool according to the invention, seen from three sides,
Figs 3a-3c a second tool according to the invention, seen from three sides,
Fig. 4 the use of the first tool, and
Fig. 5 the use of the second tool.

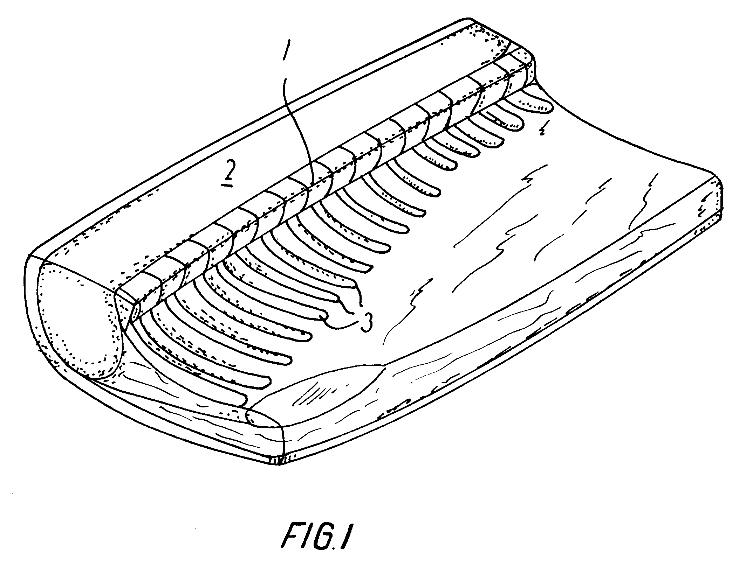

Fig. 1 shows a middle piece of a backsplit pig carcass, from which it is desired to free the spinal column 1 from the adjacent meat 2. It should be noted that spinous processes are not shown in Fig. 1. On the spinal column ribs 3 are positioned.

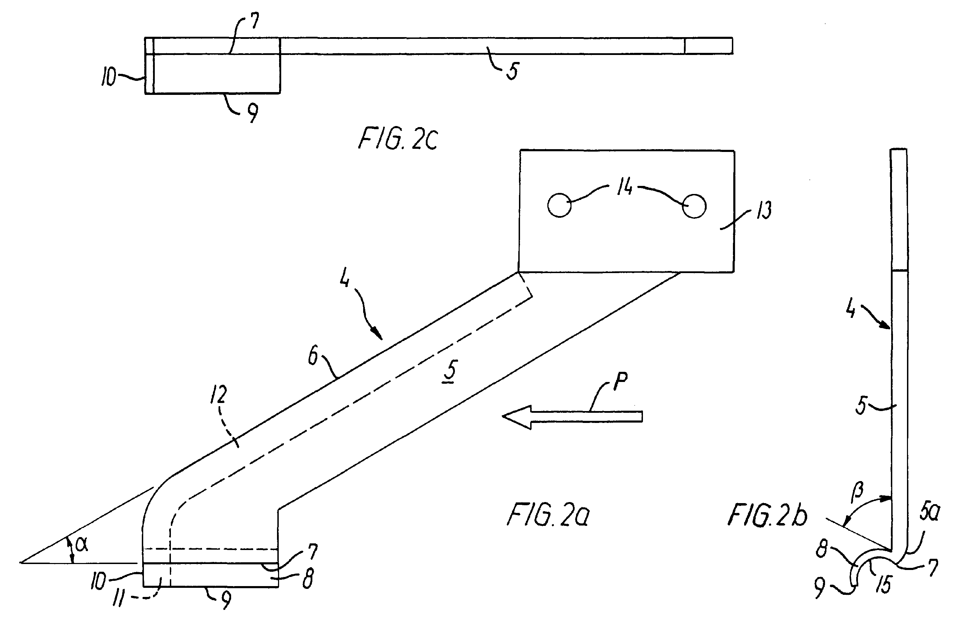

Fig. 2a-2c show a first tool 4 according to the invention. It may suitably be manufactured from stainless steel and comprises a first, plane knife part 5 with a first side edge 6 and a second side edge 7 extending at an angle α relative to the first side edge 6. Furthermore, a second, curved knife part 8 is provided, said part extending from the second side edge 7 of the first knife part 5 under formation of an acute angle *β* therewith and through a curved course to a third side edge 9, whereby a curved end edge 10 of the second knife part 8 is provided with a cutting edge established by a chamfering 11.

The first side edge 6 is also provided with a cutting edge established by a chamfering 12 on the underside of the tool, as seen in Fig. 2a.

The first and the second side edges 6, 7 form together an acute angle α, the first side edge 6 being, however, curved near the second knife part 8.

The second knife part 8 has a thickness of 3-6 mm, and its concave side forms a groove 15 and has a radius of curvature of 7-9 mm, preferably approximately 8 mm.

The upper side 5a of the first knife part 5 is at the first side edge 7 rounded downwards towards the second knife part 8 in such a manner that the latter appears to "be suspended" from the underside of the first knife part 5, which is in particular seen from Fig. 2b.

At the end opposite the second knife part 8, the first knife part 5 is provided with a shaft part 13 with holes 14 for securing the tool 4 in a machine.

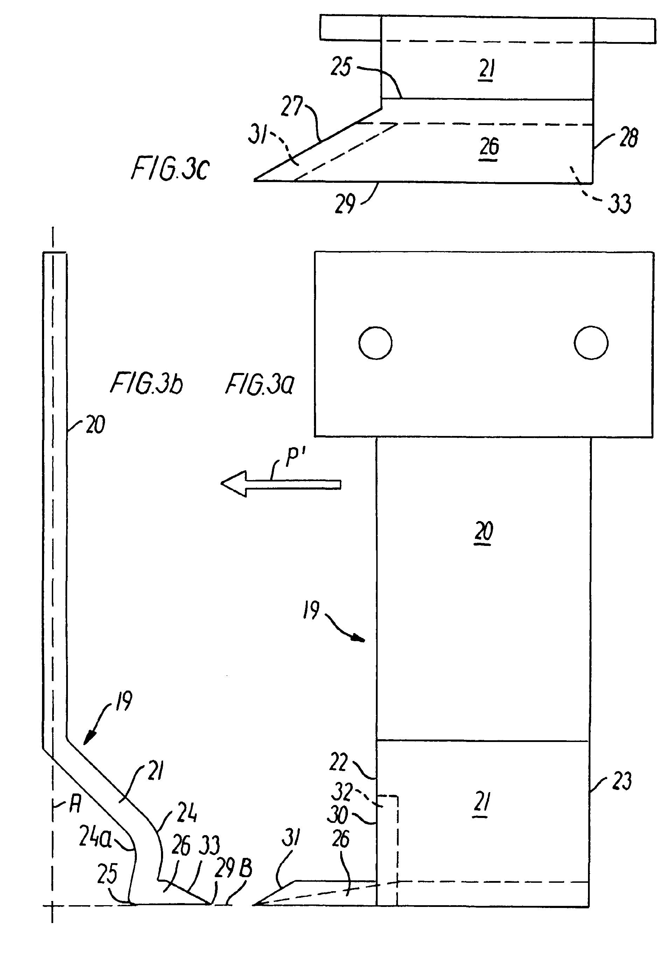

Figs 3a-3c show a second tool 19 adapted to be used after the first tool 4. The second tool 19 has a first part 20 extending in a first plane A. The second tool also has a second part 21 which from the first part 20 and relative thereto extends between two side edges 22, 23 of said second part forwards, obliquely to one side from the first plane A, through a curve 24 and somewhat backwards against said plane to a first end edge 25, the concave side of the curve 24 forming a groove 24a with a radius of curvature, which in the present example is 10 mm. Furthermore, the second tool is provided with a third part 26 which, from the end edge 25 of the second part 21, between two side edges 27, 28 of said third part 26, in a plane B intersecting the first plane A, extends away therefrom to a second end edge 29. One side edge 27 of the third part 26 and at least one adjacent part 30 of a side edge 22 of the second part 21 is provided with a cutting edge established by chamferings 31, 32. The second end edge 29 is also provided with a cutting edge with a chamfering 33. The side edge 27 of the third part 21 extends obliquely relative to the first end edge 25.

In Fig. 3b the two planes A, B extend perpendicularly to one another, and between the first and the second part 20, 21 a bend having an angle of approx. 45° is provided. This is, however, not a prerequisite for the invention. Thus both angles may be changed or the bend may be replaced by a curve in such a manner that a smooth transition between the first and the second parts 20, 21 is obtained.

The oblique position of the side edge 27 has the effect that the side edge during use is moved obliquely towards the fibres of the meat to be separated from the bones of a middle piece, which is advantageous. The side edge 27 could, however, also be tilted to the opposite side of the one shown.

Figs 4 and 5 illustrate the use of the first and the second tools, respectively.

Fig. 4 is a sectional view through a middle piece with a spinal column 1 with a feather bone 40, a rib-top tip-bone 41 and a rib connected by a joint 42. The meat 2 has been partially freed in advance from the feather bone 40, and it is now separated by means of the first tool from the bones in the area at the bottom of the spinous processes 40 to the other side of the rib-top tips. This is performed thereby that the middle piece and the first tool 4 are suspended, for instance in an apparatus of the type mentioned in WO 99/08538 or EP-A-1 059 037, in such a manner that the tool 4 is pressed resiliently towards the middle piece which by means of a conveyor is conveyed in the longitudinal direction of the spinal column past the tool 4, whereby a relative movement of the tool 4 relative to the middle piece is obtained, as shown by the arrow P in Fig. 2a. The rib-top tips 41 thereby slides in the groove 15 of the second knife part 8 in such a manner that the tool 4 and the spinal column 1 are guided relative to one another.

Fig. 5 shows, how the second tool 19 in the same manner as the first tool 4 separates the meat 2 from the bones of the middle piece, but now in the area at the transition from rib-top tips 41 to ribs 3 and somewhat downwards along the latter. The second tool 19 may be suspended in the same manner as mentioned above in respect of the first tool 4, and the rib-top tips 41 slides in the groove 24a and thereby contribute to guiding the tool 19 and the spinal column relative to one another, while the tool 19 "is moved" relative to the middle piece as shown by the arrow P' in Fig. 3a. The second tool 19 and the spinal column 1 are moreover guided relative to one another by the fact that the third part 26 of the tool 19 slides over the ribs at 3a.

## Claims

1. A tool for mechanical separation of meat and bones along the spinal column of a part carcass, **characterized** in that it comprises a first, substantially plane knife part (5) with a first side edge (6) provided with a cutting edge, and a second side edge (7) meeting the first side edge (6), and a second knife part (8) extending along the second side edge (7) of the first knife part (5) and forming an angle therewith, said other knife part having a concave, curved course at one side and ending in a third side edge (9) and being at a curved end edge (10) between the second and the third side edges (7, 9) provided with a cutting edge.

2. A tool according to claim 1, **characterized** in that the cutting edge on the end edge (10) lies substantially in the plane of the curved, concave side and moreover preferably in a plane perpendicular to the second side edge (7).

3. A tool according to claim 1, **characterized** in that the second knife part (8) has a chamfering (11) extending from the cutting edge.

4. A tool according to claims 1-3, **characterized** in that the curved side of the second knife part (8) has substantially the shape of a part of a cylinder, the generators of which lie in parallel with the second side edge (7) and/or the third side edge (9).

5. A tool according to claims 1-4, **characterized** in that the concave, curved side (15) of the second knife part (8) has a radius of curvature of 7-9 mm.

6. A tool according to claims 1-5, **characterized** in that the second knife part (8) has a thickness of 3-6 mm.

7. A tool for mechanical separation of meat from bones along the spinal column of a part carcass, **characterized** in that it comprises a first part (20) extending in a first plane (A), a second part (21) which, from the first part (20) and relative thereto, between two side edges (22, 23) of said second part (21) extends forwards, obliquely to a side of the first plane (A), through a curve (24) and somewhat backwards towards said plane (A) to a first end edge (25), and a third part (26) extending from the end edge (25) of the second part (21) at an angle relative to the first plane (A) and away therefrom to a second end edge (29), a side edge (27) of the third part (26) being provided with a cutting edge.

8. A tool according to claim 7, **characterized** in that a part (30) of a side edge (22) of the second part (21) adjacent a side edge (27) of the third part (26) is provided with a cutting edge.

9. A tool according to claim 7 or 8, **characterized** in that the side edge (27) of the third part (26) provided with a cutting edge extends obliquely forwards relative to the first end edge (25).

10. A method for mechanical separation of meat and bones along the spinal column of a part carcass, **characterized** in that a part of the spinal column 1 and a first tool (4) according to claims 1-6 are spring mounted and moved relative to each other in the longitudinal direction of the spinal column in such a manner that the rib-top tips (41) of the spinal column slide along the concave, curved side (15) of the second knife part (8) and that possibly a second tool (19) according to claims 7-9 is spring mounted and moved along the spinal column relative thereto after the first tool (4) in such a manner that the rib-top tips (41) slide along the concave side (24a) of the curved part (24) of the second part (21) of the second tool (19) and that the third part (26) slide along the ribs (3) of the part carcass.

11. An apparatus for mechanical separation of meat from bones along the spinal column of a part carcass, comprising a conveyor (10') designed to clamp and retain the part carcass at the spinal column and thus convey the part carcass in the longitudinal direction of the spinal column, characterized in that a first tool (4) according to one of the claims 1-6 is spring mounted by the side of the conveyor.

12. An apparatus according to claim 11, **characterized** in that a second tool (19) according to one of the claims 7-9 is spring mounted by the side of the conveyor after the first tool (4) relative to the travelling direction of the conveyor (10').
